# EUROPEAN PATENT APPLICATION

(11) **EP 1 962 269 A1**
(43) Date of publication of application: **27.08.2008**
(21) Application number: 06834581.8
(22) Date of filing: 13.12.2006
(51) Int. Cl.: G09G 3/36

(54) **LIQUID CRYSTAL DISPLAY DEVICE**

(30) Priority: 14.12.2005 JP 2005360169
(71) Applicant: ROHM CO., LTD., Kyoto-shi, Kyoto 615-8585 (JP)
(72) Inventor: MIYAKI, Yuji, Kyoto-shi, Kyoto 615-8585 (JP); HIRATSUKA, Kazuyuki, Kyoto-shi, Kyoto 615-8585 (JP); NIGA, Yasuhiro, Kyoto-shi, Kyoto 615-8585 (JP)
(74) Representative: McLeish, Nicholas Alistair Maxwell
(86) International application number: PCT/JP2006/324826
(87) International publication number: WO 2007/069636

(57) **Abstract**

A liquid crystal display device (A1) includes a plurality of pixels arranged in a matrix, a plurality of first electrodes (2R, 2G), a plurality of second electrodes (3) intersecting the first electrodes, a liquid crystal layer arranged between the first electrodes and the second electrodes, a color filter directly or indirectly covering each of the first electrodes, and a driver (7) for supplying image display signals to the first electrodes and the second electrodes. The first electrodes are connected to scanning signal supply terminals of the driver to periodically receive a scanning signal. The second electrodes are connected to control signal supply terminals of the driver to selectively receive a control signal. The driver causes the liquid crystal layer to be in either an ON state or an OFF state by supplying the scanning signal and the control signal to the first electrodes and the second electrodes, respectively.

## Description

### TECHNICAL FIELD

The present invention relates to a liquid crystal display device for color display.

### BACKGROUND ART

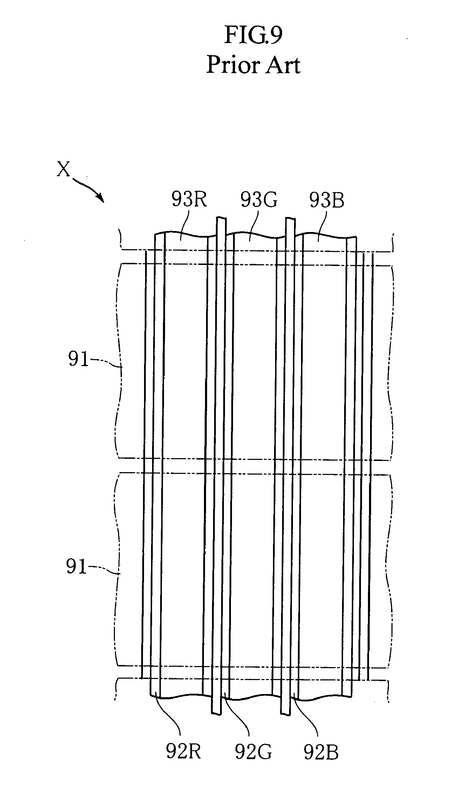

Fig. 9 of the accompanying drawings shows a conventional liquid crystal display device disclosed in e.g. JP-A-2002-229009. The liquid crystal display device X shown in the figure includes a plurality of first electrodes (scanning electrodes) 91 and a plurality of second electrodes (counter electrodes) 92R, 92G, 92B arranged to sandwich a liquid crystal layer (not shown). The first electrodes 91 and the second electrodes 92R, 92G, 92B are transparent electrodes made of e.g. ITO and provided on the facing surfaces (inner surfaces) of a pair of transparent substrates (not shown) arranged to face each other to be connected to a driver (not shown). The first electrodes 91 are periodically driven by the driver. By applying a voltage between the first electrodes 91 and the second electrodes 92R, 92G, 92B, the polarization state of the liquid crystal in the liquid crystal layer is changed, whereby the amount of the light passing through the liquid crystal layer is controlled. The second electrodes 92R, 92G, 92B are covered by filters 93R, 93G, 93B. The filters 93R, 93G, 93G selectively transmit red light, green light and blue light, respectively. One pixel is defined by a single first electrode 91 and three adjacent second electrodes 92R, 92G, 92B overlapping each other. The light emission state of each pixel is determined by controlling the voltage to be applied to each of the second electrodes 92R, 92G, 92B to control the luminance of each color. By appropriately controlling the light emission state for each pixel, the liquid crystal display device X can display a full-color image.

In the liquid crystal display device X, however, a single pixel includes three second electrodes 92R, 92G, 92B. Thus, even when the number of the pixels arranged in the horizontal direction in the figure is equal to the number of the pixels arranged in the vertical direction in the figure, the total number of the second electrodes 92R, 92G, 92B is three times the number of the first electrodes 91.

Generally, to use the liquid crystal display device X for the display of e.g. a portable music player, the liquid crystal display device X is designed to be elongate in the horizontal direction, i.e., include a considerably larger number of pixels in the horizontal direction than in the vertical direction. In this case, it is possible to reduce the number of the first electrodes 91 in accordance with the smaller number of pixels arranged in the vertical direction. However, it is unavoidable that the number of the second electrodes 92R, 92G, 92B which need to be provided is three times the number of the pixels arranged in the horizontal direction. Moreover, to achieve the full-color display, the driver to drive the liquid crystal display device needs to apply voltages of different levels to the second electrodes 92R, 92G, 92B, which requires complicated control. Thus, the use of a driver with a high function and the accompanying increase in size are necessary, which leads to an increase in the cost.
Patent Document 1: JP-A-2002-229009

### DISCLOSURE OF THE INVENTION

An object of the present invention, proposed under the circumstances described above, is to provide a liquid crystal display device capable of achieving a reduction in size and cost while achieving color display (including pseudo-full-color display).

The present invention has been made by focusing on the following. When a full-color display is not needed, it is possible to provide a color display without applying voltages of different levels. In such an instance, the electrodes accompanied with color filters (the second electrodes 93R, 93G, 93B in the prior art shown in Fig. 9) can be utilized as scanning electrodes for the desired color display (note that the scanning voltage is constant).

According to the present invention, there is provided a liquid crystal display device provided with a plurality of pixels arranged in a matrix. The liquid crystal display device comprises: a plurality of first electrodes extending to be elongated in a first direction and spaced from each other in a second direction which intersects the first direction; a plurality of second electrodes extending to be elongated in the second direction and spaced from each other in the first direction; a liquid crystal layer arranged between the first electrodes and the second electrodes; color filters directly or indirectly covering the first electrodes, respectively; and a driver for supplying image display signals to the first electrodes and the second electrodes. The first electrodes are connected to scanning signal supply terminals of the driver to periodically receive a scanning signal. The second electrodes are connected to control signal supply terminals of the driver to selectively receive a control signal. The driver causes the liquid crystal layer to be in either one of only two states, i.e., an ON state and an OFF state, by supplying the scanning signal and the control signal to the first electrodes and the second electrodes, respectively.

Preferably, the number of the pixels arranged in the first direction may be larger than the number of the pixels arranged in the second direction. In this case, the number of the first electrodes may be an integral multiple of the number of the pixels arranged in the second direction, and the number of the second electrodes may be equal to the number of the pixels arranged in the first direction. Since the number of the pixels arranged in the second direction is smaller, the size of the liquid crystal display device does not increase even when the number of the first electrodes is an integral multiple of the number of the pixels.

Preferably, each of the pixels may correspond to a predetermined number of adjacent first electrodes and a single second electrode, and the color filters covering the predetermined number of first electrodes have different colors from each other. With this arrangement, the liquid crystal display device can display a color image including a desired number of colors.

In an embodiment of the present invention, the pixels may be grouped into a number of unit display sections. The first electrodes are connected to the scanning signal supply terminals of the driver via a plurality of first wirings, whereas the second electrodes are connected to the control signal supply terminals of the driver via a plurality of second wirings. Each of the first electrodes includes a first end and a second end opposite to the first end. Selected ones of the first electrodes are connected to the first wirings at the first ends thereof, while the remaining first electrodes are connected to the first wirings at the second ends thereof. Preferably, the driver may be in the form of an elongated rectangle, where the scanning signal supply terminal is provided at each of two shorter sides of the driver, whereas the control signal supply terminal is provided at a longer side of the driver.

In another embodiment of the present invention, the driver may be in the form of an elongated rectangle, and the scanning signal supply terminal and the control signal supply terminal are provided at a longer side of the driver.

Other features and advantages of the present invention will become more apparent from the detailed description given below with reference to the accompanying drawings.

### BRIEF DESCRIPTION OF THE DRAWINGS

Fig. 1 is a plan view showing a liquid crystal display device according to a first embodiment of the present invention.
Fig. 2 is a schematic view showing a principal portion of the liquid crystal display device according to the first embodiment.
Fig. 3 is an enlarged view showing a principal portion of the liquid crystal display device according to the first embodiment.
Fig. 4 is a sectional view taken along lines IV-IV in Fig. 3.
Fig. 5 is a plan view showing a liquid crystal display device according to a second embodiment of the present invention.
Fig. 6 is a schematic view showing a principal portion of the liquid crystal display device according to the second embodiment.
Fig. 7 is an enlarged view showing a principal portion of the liquid crystal display device according to the second embodiment.
Fig. 8 is a schematic view showing a principal portion of a liquid crystal display device according to a third embodiment of the present invention.
Fig. 9 is a schematic view showing a principal portion of a conventional liquid crystal display device.

### BEST MODE FOR CARRYING OUT THE INVENTION

Preferred embodiments of the present invention will be described below with reference to the accompanying drawings.

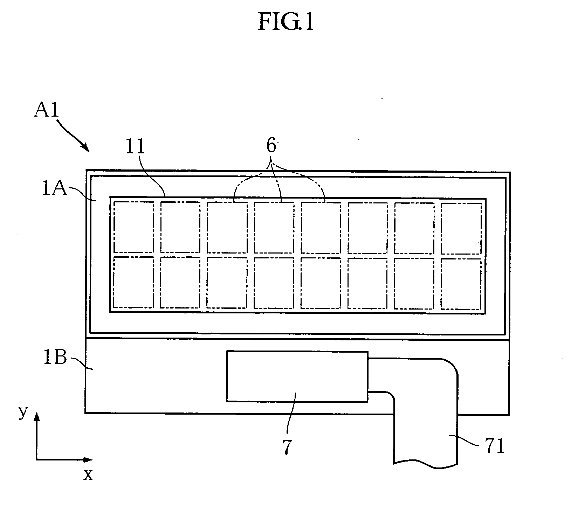

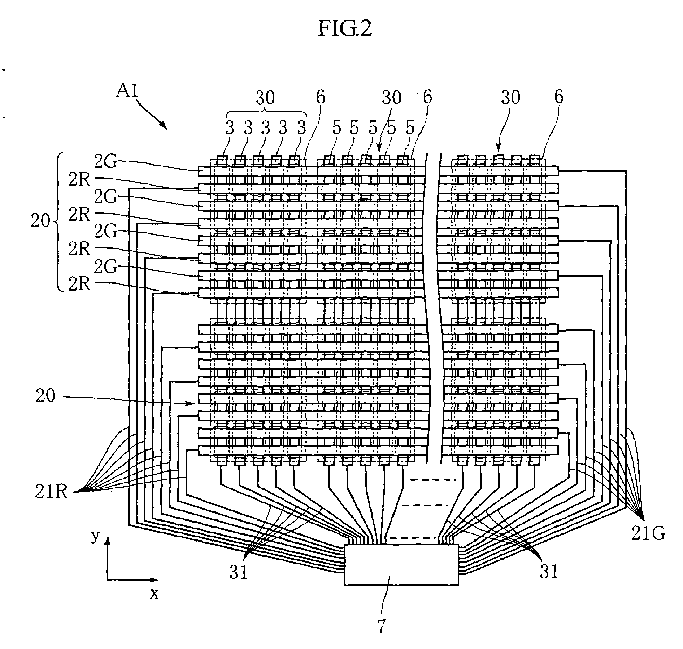

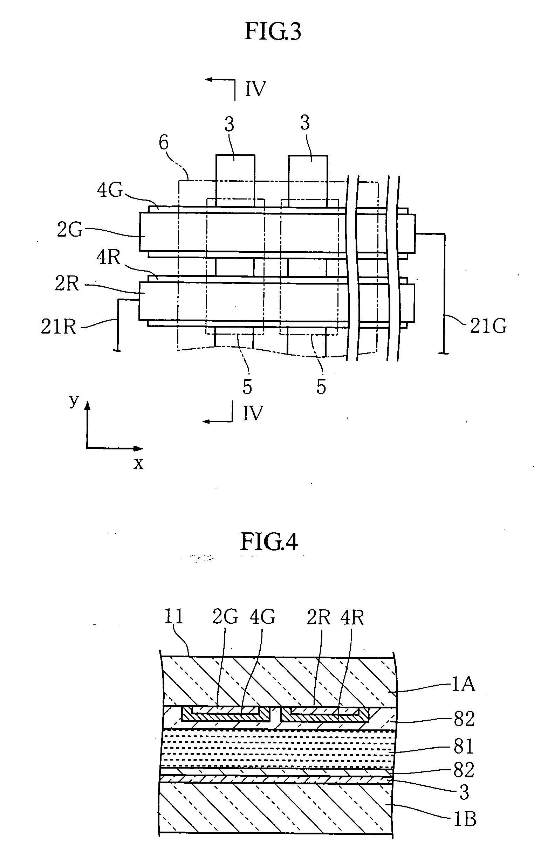

Figs. 1-4 show a liquid crystal display device A1 according to a first embodiment of the present invention. The liquid crystal display device A1 of this embodiment includes a pair of substrates 1A and 1B, a plurality of first electrodes (scanning electrodes) 2R and 2G, a plurality of second electrodes (counter electrodes) 3, a plurality of first wirings 21R and 21G, a plurality of second wirings 31, and a driver 7. The liquid crystal display device is capable of performing four-color display including black. For convenience of understanding, the illustration of the paired substrates 1A and 1B is omitted in Fig. 2. Fig. 3 shows a principal portion of the liquid crystal display device A1 as enlarged. Fig. 4 is a sectional view of the liquid crystal display device A1.

As shown in Fig. 1, each of the substrates 1A and 1B is in the form of an elongated rectangle and is a transparent substrate made of e.g. glass. The paired substrates 1A and 1B are arranged to face each other to sandwich a liquid crystal layer 81 therebetween. The substrate 1B is larger than the substrate 1A in width. An illuminator (not shown) is arranged below the substrate 1B. The substrates 1A and 1B can allow the light from the illuminator to pass through. The outer surface of the substrate 1A provides a display surface 11.

The space between the substrates 1A and 1B is hermetically sealed by a sealing member (not shown). As shown in Fig. 4, the liquid crystal layer 81 is formed in the sealed space. The liquid crystal layer 81 is made of a liquid crystal material such as nematic liquid crystal. By changing the polarization state of the liquid crystal layer 81 in accordance of the image to be displayed, the intensity of the light passing through the liquid crystal layer 81 is adjusted. Thus, the liquid crystal display device A1 displays the image.

As shown in Fig. 4, the first electrodes 2R and 2G are formed on the inner surface of the substrate 1A. The first electrodes 2R and 2G are made of e.g. ITO and transparent. Referring to Fig. 2, the first electrodes 2R, 2G are elongated in the x direction (longitudinal direction of the substrate) while being spaced from each other in the y direction (width direction of the substrate). As shown in Figs. 3 and 4, each of the first electrodes designated by the reference sign 2R is covered with a red filter 4R, whereas each of the first electrodes designated by the reference sign 2G is covered with a green filter 4G. The filters 4R and 4G are thin films which transmit red light and green light, respectively. Accordingly, the first electrodes 2R and 2G are utilized for red light emission and green light emission, respectively. A predetermined number of first electrodes 2R, 2G located adjacent to each other constitute a first electrode group 20 corresponding to one letter (or numeral or symbol).

As shown in Fig. 4, the second electrodes 3 are formed on the inner surface of the substrate 1B. The second electrodes 3 are made of e.g. ITO and transparent. Referring to Fig. 2, the second electrodes 3 are elongated in the y direction while being spaced from each other in the x direction. A predetermined number of second electrodes 3 located adjacent to each other constitute a second electrode group 30 corresponding to one letter (or numeral or symbol).

As shown in Fig. 4, the first electrodes 2R, 2G and the second electrodes 3 are covered with protective films 82. The protective films 82 have a function to protect the first electrodes 2R, 2G and the second electrode 3 and an alignment function with respect to the liquid crystal layer 81.

As shown in Figs. 2 and 3, one pixel 5 is defined by two adjacent first electrodes 2R, 2G and one second electrode 3. As will be described later, each pixel 5 exhibits any one of four colors, including black, in accordance with the voltage application to the first wirings 21R, 21G.

As shown in Fig. 1, in this embodiment, the display surface 11 includes 16 unit display sections 6 arranged in eight columns in the x direction and two rows in the y direction. Each of the unit display sections 6 displays one letter (or numeral or symbol). As shown in Figs. 2 and 3, each of the unit display sections 6 comprises a region where a single first electrode group 20 and a single second electrode group 30 overlap each other and includes a plurality of pixels 5 arranged in a matrix.

As shown in Fig. 2, the first electrodes 2R and 2G are connected to a scanning signal supply terminal of the driver 7 via the first wirings 21R and 21G, respectively. The second electrodes 3 are connected to a control signal supply terminal of the driver 7 via the second wirings 31. As shown in Fig. 1, the driver 7 is mounted on the substrate 1B at a portion projecting from the substrate 1A. The driver 7 periodically supplies scanning signals (a predetermined voltage) to the first electrodes 2R and 2G while selectively supplying control signals (a predetermined voltage) to the second electrodes 3. Both of the scanning signals for the first electrodes 2R, 2G and the control signals for the second electrodes 3 serve to set the electrodes to either one of the ON state and the OFF state, i.e., either one of the state in which a predetermined voltage is applied and the state in which no voltage is applied. The driver 7 stores data of the image to be displayed at the unit display sections 6. For instance, the image data corresponds to a lighting pattern of the pixels 5 included in each unit display section 6, which is prepared to correspond to the image identification code such as ASCII code. The drive 7 is connected to a printed wiring board 71 for signal transmission/reception and power supply from the outside.

The first wirings 21R, 21G and the second wirings 31 are so-called wiring patterns formed on the substrates 1A and 1B and made of a conductive material such as ITO, Au or Cu, for example. As shown in Fig. 2, the first wirings designated by the reference sign 21R are connected to the first electrodes 2R from the left side in the figure and collectively connected to the left end of the driver 7 in the figure. The first wirings designated by the reference sign 21G are connected to the first electrodes 2G from the right side in the figure and collectively connected to the right end of the driver 7 in the figure.

The displaying operation by the liquid crystal display device A1 is performed as follows. The identification code and color data of the image to be displayed at each unit display section are inputted into the driver 7 via the printed wiring board 71. In this embodiment, the color data corresponds to any one of red, green, yellow and black. As noted before, image data is stored in the driver 7. While periodically supplying scanning signals to the first electrodes 2R and 2G, the driver 7 supplies a control signal (voltage) selectively to the second electrode 3 corresponding to a pixel to be turned on. Specifically, in the case where the image (letter, numeral or symbol) to be displayed at a unit display section 6 is red, the driver supplies a control signal selectively to the second electrode 3 corresponding to the pixel 5 to be turned on when a scanning signal is supplied to the first electrode 2R corresponding to the pixel 5. In the case where the image to be displayed at a unit display section 6 is green, the driver supplies a control signal selectively to the second electrode 3 corresponding to the pixel 5 to be turned on when a scanning signal is supplied to the first electrode 2G corresponding to the pixel 5. In the case where the image to be displayed at a unit display section 6 is yellow, the driver supplies a control signal selectively to the second electrode 3 corresponding to the pixel 5 to be turned on when a scanning signal is supplied to the first electrodes 2R, 2G corresponding to the pixel 5. For a.pixel 5 which is to be kept black, the driver does not supply a control signal to the second electrode 3 corresponding to the pixel even when a scanning signal is supplied to the first electrodes 2R, 2G corresponding to the pixel. In this way, the driver 7 performs the image displaying operation by selecting a red and/or green light emission state or a non-light-emission state for each pixel 5 in each unit display section 6.

The liquid crystal display device A1 is designed to display a color image utilizing four colors, i.e., red, green yellow and black and is not designed to display a full-color image. Thus, it is only necessary for the scanning signals to be supplied to the first electrodes 2R, 2G and the control signals to be supplied to the second electrodes 3 to be either one of the "ON" state and the "OFF" state (thereby to cause the liquid crystal layer 81 to be in either one of the two states, i.e., the "ON" state and the "OFF" state). Accordingly, it is not necessary to set different levels of signal voltages. Thus, the same color display is possible even if control signals are supplied to the first electrodes 2R, 2G and scanning signals are supplied to the second electrodes 3.

In this embodiment, however, scanning signals are supplied to the first electrodes 2R and 2G covered with the color filters 4R and 4G because of the following reasons. Provided that the first electrodes 2R and 2G, not the second electrodes 3, are to be arranged side by side at predetermined intervals in the x direction in Fig. 2, the total number of the first electrodes 2R, 2G required is twice the total number of the pixels 5 arranged side by side in the x direction. As will be easily understood from Fig. 1, when the display surface 11 is longer in the x direction than in the y direction, the number of pixels in the x direction is larger. Thus, when the first electrodes 2R, 2G are to be arranged side by side at predetermined intervals in the x direction, the number of the first electrodes required, which is twice the large number of the pixels, is considerably large. On the other hand, the number of the pixels in the y direction is relatively small. Thus, even when the first electrodes 2R, 2G twice as many as the pixels in the y direction are arranged side by side at predetermined intervals in the y direction, the total number of the first electrodes is considerably small. The number of the second electrodes 3 is equal to the number of the pixels 5 arranged in the x direction. The number of the second electrodes 3 is considerably smaller than the number of the second electrodes 92R, 92G, 92B for respective colors (for supply of control signals of different voltage levels) provided in the conventional structure shown in Fig. 9. Thus, in this embodiment, the total number of the first electrodes 2R, 2G and the second electrodes 3 as well as the total number of the first wirings 21R, 21G and the second wirings 31 connected to the driver 7 are reduced. In this way, the liquid crystal display device A1 according to this embodiment achieves color display with a simple structure and simple control by the driver 7.

As noted before, it is only necessary for the scanning signals to be supplied to the first electrodes 2R, 2G and the control signals to be supplied to the second electrodes 3 to be either one of the "ON" state and the "OFF" state, and it is not necessary to set different levels of signal voltages. Thus, as the driver 7 for driving the liquid crystal display device A1, a driver for monochrome image display can be used. The function of a driver for monochrome image display is relatively simple, and the size of the driver is relatively small. Thus, the size of the liquid crystal display device A1 and the manufacturing cost are reduced.

Moreover, as shown in Fig. 2, the first electrodes 2R for red are connected to the driver 7 via the first wirings 21R arranged on the left side in the figure, whereas the first electrodes 2G for green are connected to the driver 7 via the first wirings 21G arranged on the right side in the figure. Thus, the first wirings 21R and 21G as a whole are not tightly arranged. Thus, the formation of the wiring pattern including the second wirings 31 for the second electrodes 3 is facilitated, so that electrical failure such as short-circuiting is unlikely to occur.

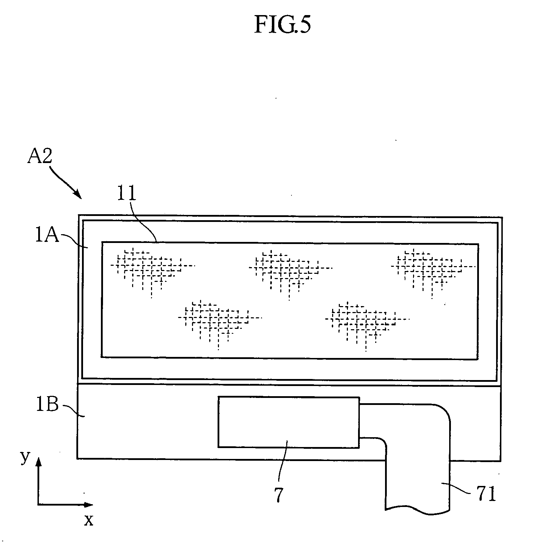

Figs. 5-7 show a liquid crystal display device A2 according to a second embodiment of the present invention. In these figures, the elements which are identical or similar to those of the first embodiment are designated by the same reference signs as those used for the first embodiment.

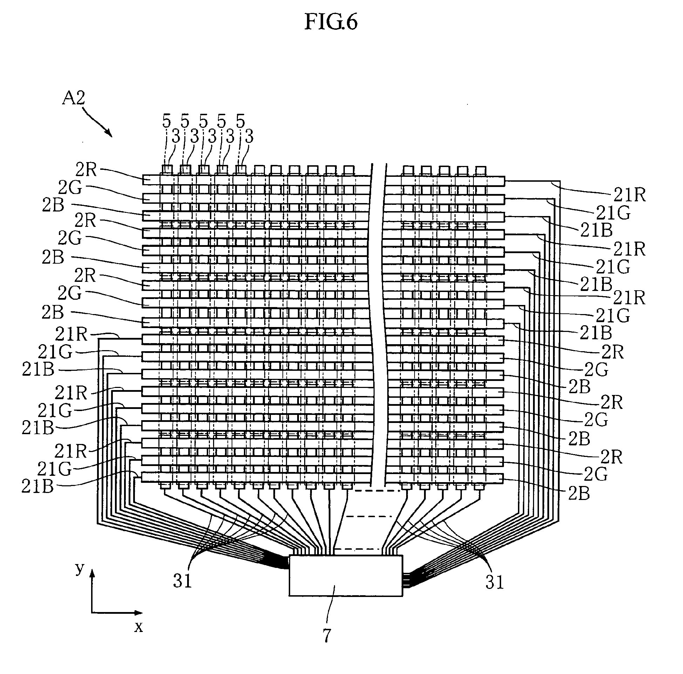

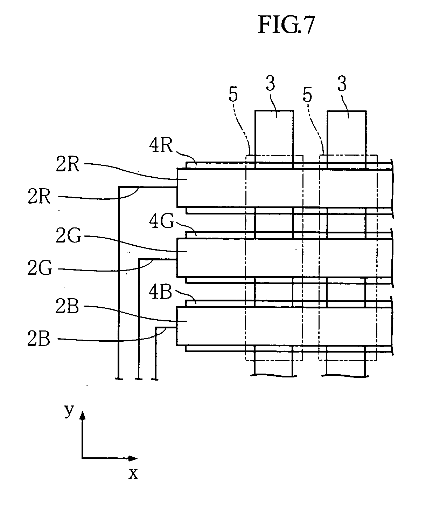

As shown in Fig. 6, the liquid crystal display device A2 has a full-dot/pseudo-full-color display function and is not divided into such unit display sections 6 as shown in Figs. 1 and 2. The liquid crystal display device A2 includes a plurality of first electrodes (scanning electrodes) 2R, 2G, 2B and a plurality of second electrodes (counter electrodes) 3. As shown in Fig. 7, the first electrodes 2R, 2G and 2B are covered with filters 4R, 4G and 4B, respectively. The filters 4R, 4G and 4B transmit red light, green light and blue light, respectively.

Both of the first electrodes 2R, 2G, 2B and the second electrodes 3 are arranged at a predetermined pitch and form a plurality of pixels 5 arranged in a matrix. As shown in Fig. 6, the upper half of the first electrodes 2R, 2G, 2B in the figure are connected to a driver 7 via the first wirings 21R, 21G, 21B arranged on the right side in the figure, whereas the lower half of the first electrodes 2R, 2G, 2B in the figure are connected to the driver 7 via the first wirings 21R, 21G, 21B arranged on the left side in the figure.

In the second embodiment, the data of the image to be displayed at the display surface 11 is inputted into the driver 7. Based on the image data, the driver 7 periodically supplies a scanning signal to each of the first electrodes 2R, 2G, 2B while supplying control signals (voltage) selectively to the second electrodes 3. As a result, each of the pixels 5 exhibits any one of the eight colors made up of seven colors of red, green, blue, yellow, light blue, purple and white as the color exhibiting state and black as the non-color-exhibiting state.

According to the second embodiment again, the total number of the electrodes 2R, 2G, 2B, 3 and the total number of the wirings 21R, 21G, 21B, 31 are reduced, the structure and function of the driver 7 are simplified, and the size of the liquid crystal display device A2 is reduced. Moreover, since the pseudo-full-color display is achieved by eight-color display performed by selecting the ON/OFF state with respect to each of the RGB colors, a driver for monochrome image display can be used as the driver 7.

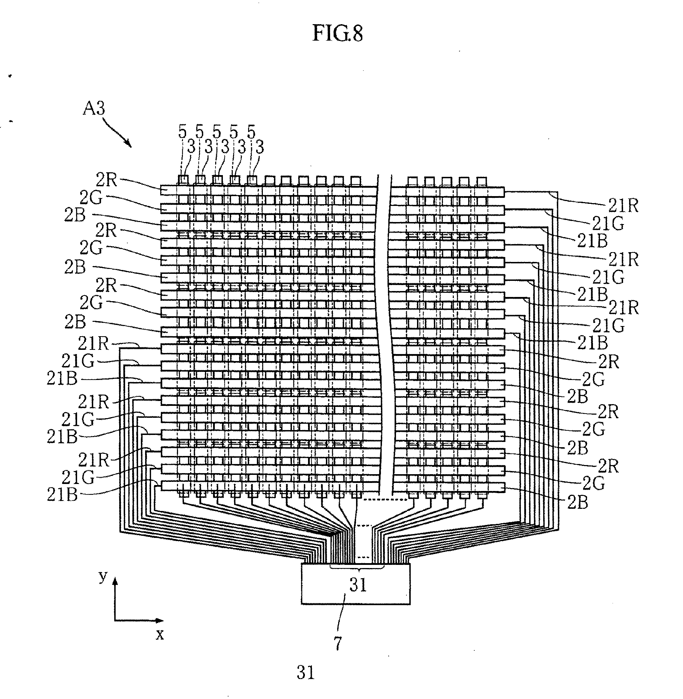

Fig. 8 shows a liquid crystal display device A3 according to a third embodiment of the present invention. The liquid crystal display device A3 differs from the liquid crystal display device A2 shown in Fig. 6 in connection position of the first wirings 21R, 21G, 21B relative to the driver 7. Specifically, in the liquid crystal display device A3, the first wirings 21R, 21G, 21B are connected to portions adjacent to the two ends of the upper edge of the driver 7 in the figure. Similarly to the third embodiment, the first wirings 21R, 21G, 21B may be connected to portions adjacent to the two ends of the upper edge of the driver 7 in the figure also in the first embodiment shown in Fig. 2.

The liquid crystal display device according to the present invention is not limited to the foregoing embodiments. The specific structure of each part of the liquid crystal display device may be varied in many ways within the scope of the spirit of the present invention as set forth in the claims. For instance, although it is reasonable to employ filters for transmitting RGB colors, the present invention is not limited to this. For instance, a filter which selectively transmits a color other than RGB.colors may be employed. Further, any of the filters for transmitting RGB colors can be employed. The number of pixels, the number of unit display sections, and the arrangement of the pixels and unit display sections in the liquid crystal display device are not limited to the foregoing embodiments.

## Claims

1. A liquid crystal display device provided with a plurality of pixels arranged in a matrix, the liquid crystal display device comprising:
a plurality of first electrodes elongated in a first direction and spaced from each other in a second direction intersecting the first direction;
a plurality of second electrodes elongated in the second direction and spaced from each other in the first direction;
a liquid crystal layer arranged between the first electrodes and the second electrodes;
color filters directly or indirectly covering the first electrodes, respectively; and
a driver for supplying image display signals to the first electrodes and the second electrodes;
wherein the first electrodes are connected to scanning signal supply terminals of the driver to periodically receive a scanning signal,
wherein the second electrodes are connected to control signal supply terminals of the driver to selectively receive a control signal,
wherein the driver causes the liquid crystal layer to be in either one of only two states consisting of an ON state and an OFF state by supplying the scanning signal and the control signal to the first electrodes and the second electrodes, respectively.

2. The liquid crystal display device according to claim 1, wherein the pixels arranged in the first direction is larger in number than the pixels arranged in the second direction.

3. The liquid crystal display device according to claim 2, wherein the number of the first electrodes is an integral multiple of the number of the pixels arranged in the second direction, and wherein the number of the second electrodes is equal to the number of the pixels arranged in the first direction.

4. The liquid crystal display device according to claim 3, wherein each of the pixels corresponds to a predetermined number of adjacent first electrodes and a single second electrode, and wherein the color filters covering the predetermined number of first electrodes have different colors from each other.

5. The liquid crystal display device according to claim 1, wherein the pixels are grouped into a predetermined number of unit display sections.

6. The liquid crystal display device according to claim 1, wherein the first electrodes are connected to the scanning signal supply terminals of the driver via a plurality of first wirings, and the second electrodes are connected to the control signal supply terminals of the driver via a plurality of second wirings.

7. The liquid crystal display device according to claim 6, wherein each of the first electrodes includes a first end and a second end opposite to the first end, and wherein selected ones of the first electrodes are connected to the first wirings at the first ends thereof, while other first electrodes are connected to the first wirings at the second ends thereof.

8. The liquid crystal display device according to claim 6, wherein the driver is an elongated rectangle in shape, wherein the scanning signal supply terminals are provided at two shorter sides of the driver, and the control signal supply terminals are provided at a longer side of the driver.

9. The liquid crystal display device according to claim 6, wherein the driver is an elongated rectangle in shape, and the scanning signal supply terminals and the control signal supply terminals are provided at a longer side of the driver.
